# EUROPEAN PATENT SPECIFICATION

(11) **EP 2 326 188 B1**
(45) Date of publication and mention of the grant of the patent: **03.10.2012**
(21) Application number: 09807185.5
(22) Date of filing: 11.08.2009
(51) Int. Cl.: A23L 1/00

(54) **METHOD OF REDUCING ACRYALMIDE BY TREATING A FOOD PRODUCT**
VERFAHREN ZUR ACRYALMIDREDUKTION DURCH DIE BEHANDLUNG EINES LEBENSMITTELPRODUKTS
PROCÉDÉ DE RÉDUCTION DE LA TENEUR EN ACRYLAMIDE PAR LE TRAITEMENT D'UN PRODUIT ALIMENTAIRE

(30) Priority: 11.08.2008 US 189404
(43) Date of publication of application: 01.06.2011
(73) Proprietor: Frito-Lay North America, Inc., Plano, TX 75024-4099 (US); Bhaskar, Ajay Rajeshwar, Allen, TX 75013 (US); Topor, Michael Grant, Little Elm, TX 75068 (US)
(72) Inventor: BHASKAR, Ajay, Rajeshwar, Allen, TX 75013 (US); TOPOR, Michael, Grant, Little Elm, TX 75068 (US)
(74) Representative: Jenkins, Peter David
(86) International application number: PCT/US2009/053454
(87) International publication number: WO 2010/019602

(56) References cited:
- WO-A1-2006/128843
- GB-A- 1 200 523
- US-A- 4 931 296
- US-A1- 2005 202 153
- US-A1- 2006 057 260
- US-A1- 2007 141 227
- US-A1- 2008 166 450

## Description

### BACKGROUND OF THE INVENTION

Technical Field

The present invention relates to a method for producing dehydrated food products, and more specifically to a method for making dehydrated potato products having a reduced level of acrylamide.

Description of Related Art

In the food industry, potato-based products are typically made from dough mixes incorporating potato derivatives such as potato flakes, potato granules, potato flour, and potato starch. Examples of such potato-based products include potato chips and potato sticks.

Potato flakes and potato granules are the most common types of dehydrated potato products. Potato flakes and potato granules comprise dehydrated single cells, or aggregates of cells, of the potato tuber dried to a moisture content of 6% to 8%. As the names imply, potato flakes have a crystal-like shape, while potato granules have a granular shape. Both potato flakes and potato granules can be rehydrated (i.e., reconstituted) to make mashed potato products and fabricated snack products.

Various processes for making potato flakes and potato granules, are well known in the art. An object of most prior art processes is to provide flakes or granules that can be rehydrated to make a potato product that has the flavor and texture of fresh cooked potatoes.

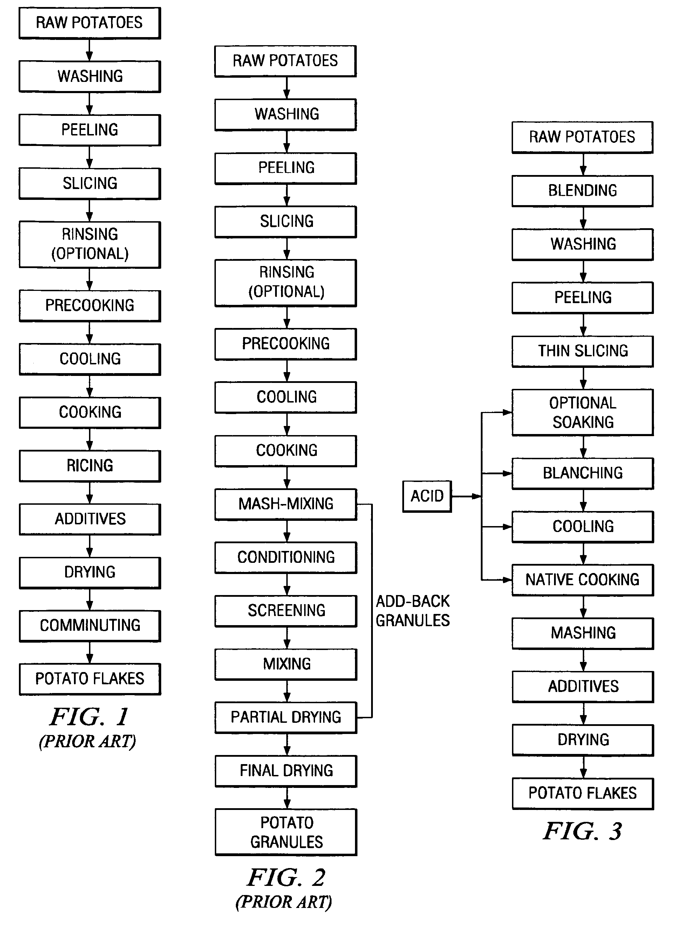

FIG. 1 illustrates process steps in a conventional prior art process for making potato flakes. Initially, fresh potatoes are washed, peeled, sliced into slices of 1,27 cm (0.5 inches) and optionally rinsed. The raw potato slices are then precooked, typically by immersion in water held at about (160°F to 165°F) 71.1 °C to 73.9° C for a period of about 15-20 minutes. As used herein, the terms "precooked" and "blanched" are synonymous. The pH of the water in the precooking step is typically 6.25 to 6.50. The precooking step gelatinizes starches within the potato cells, preferably with minimal swelling and bursting of the potato cells, such that retrogradation can take place during a subsequent cooling step. The bonds formed between the potato cells will thus be preserved during subsequent cooking and drying steps, and the reconstituted finished flake will have a reduced stickiness.

The cooling step is performed by immersing the precooked potato slices in water held at, or below, (75°F) 23.9°C for about 20 to 60 minutes. Following cooling, the potato slices are cooked, typically with steam, at a temperature of about (190°F-250°F) 87.8°C to 121°C for 15 to 60 minutes. One type of steam cooker includes a screw conveyor which moves the potato slices through a steam chamber containing live steam.

Following cooking, the cooked potato slices are comminuted to form a potato mash. Typical means for comminuting potato slices include ricing, mashing, and shredding. Next, additives are added to the potato mash to enhance flavor, texture, stability, and mash drying. Representative additives include solutions of sodium bisulfite for retarding non-enzymatic browning, and emulsions of a monoglyceride emulsifier, antioxidants and various chelating agents. Following the additive step, a drying step is performed on the potato mash, typically with a drum dryer. The drum dryer dries the mash into a potato sheet having a moisture content of about 6% to 10%. Following drying, the potato sheet can be comminuted into potato flakes using a comminuting apparatus such as a hammermill.

FIG. 2 illustrates process steps in a conventional prior art process for making potato granules. Initially raw potatoes are washed, peeled, sliced, precooked, cooled, cooked, comminuted and additives added substantially as previously described. During a mash mixing step hot cooked potatoes are mixed with dry add back granules until a homogeneous moist mix is obtained. Following mash mixing, a conditioning step equalizes the moisture throughout the mix, which is then passed over a fine mesh vibrating screen to remove large agglomerates and bruised portions of potato tissues. The product is then further mixed, and dried using a drying apparatus such as an air lift dryer, or a fluidized bed dryer. Following drying to a moisture content of about 12% to 13%, a portion of the material is removed for add back, and the remainder is then finish dried to a moisture content of about 6% to 10%, again by using a drying apparatus.

Both of the above described processes for making potato flakes and potato granules have been used in the art since about the 1950s. Over the years various processes have been proposed in which the above fabrication processes are modified. Representative processes are described in U.S. Pat. Nos. 5,707,671 and 5,292,542 to Beck et al.; U.S. Pat. No. 3,574,643 to Lewis; and U.S. Pat. No. 3,764,716 to Rainwater et al.

Potato flakes are used as ingredients in many food products including fabricated snack chips. While the specific chemical composition of the potato flakes or potato granules are based upon several factors such as potato variety, type of soil and geographic location in which the potato is grown, and storage environment, most potatoes naturally have the amino acid asparagine and native reducing sugars such as fructose and glucose that can form acrylamide when subjected to sufficient heat. There is little acrylamide formation in potato flakes possibly because potato flakes and granules typically have moisture contents of between about 6% and about 15% by weight. For example, analysis of flakes has revealed very low acrylamide levels in flakes (less than 100 ppb). However, when these flakes are used in doughs which are subsequently thermally processed at temperatures above 120°C to make low moisture food products (e.g., moisture contents less than 3% by weight), such food products can have levels of acrylamide much higher than 100 ppb. Consequently, it would be desirable to make a food ingredient, such as a potato flake or potato granule that could be used as an ingredient in a food product which results in a food product having a reduced level of acrylamide. It would also be desirable to provide an effective treatment method for lowering the level of acrylamide in a food product made from a sliced or shredded potato.

### SUMMARY OF THE INVENTION

The present invention, in one aspect, is directed towards a method for making a low acrylamide food ingredient. In one aspect, a raw food having asparagine is peeled and sliced and treated in an acidic solution. In one embodiment, the food pieces are treated with an acid during the blanching step. In one aspect, the treated food pieces are steam cooked. The treated potato slices are next mashed and dried to a moisture content of between about 6% and about 15% by weight. In one aspect, the present invention provides a low acrylamide potato flake that can be used as an ingredient in dough where the dough is thermally processed above about 120°C to a moisture content of less than about 3% by weight. In one aspect, the present invention is directed towards native cooking food pieces in an acidic solution to make treated food pieces, mashing and drying the treated food pieces. In one aspect, the present invention is directed towards blanching a food pieces in an acidic solution, and drying the food pieces. The above as well as additional features and advantages of the present invention will become apparent in the following written detailed description.

### BRIEF DESCRIPTION OF THE DRAWINGS

The novel features believed characteristic of the invention are set forth in the appended claims. The invention itself, however, as well as a preferred mode of use, further objectives and advantages thereof, will be best understood by reference to the following detailed description of illustrative embodiments when read in conjunction with the accompanying drawings, wherein:

Figure 1 depicts a flow diagram of process steps in a prior art process for making potato flakes;

Figure 2 depicts a flow diagram of process steps in a prior art process for making potato granules; and

Figure 3 depicts a flow diagram of a method for making treated potato flakes in accordance with one embodiment of the present invention.

### DETAILED DESCRIPTION

Figure 3 depicts a flow diagram of a method for making potato flakes in accordance with one embodiment of the present invention. Figure 3 shows only one embodiment of the current invention. Various steps and ingredients may be inserted or removed from the illustrated embodiment and still be within the scope of the present invention.

First, raw potatoes can be selected and blended together to reach a desired composition. For example, potatoes having a relatively low reducing sugar content, e.g., 0.8% by weight can be mixed with potatoes having a higher reducing sugar content, e.g., 2% by weight, to achieve the level of reducing sugars desired in the potato mash. As previously mentioned, the specific chemical composition, including the reducing sugar concentration, of a potato is based upon several factors such as potato variety, type of soil and geographic location in which the potato is grown, and storage environment. Consequently, it may be desirable to blend raw potato stock as to create a potato mash having a desired chemical composition profile. Any commercially available potatoes used to prepare conventional potato flakes can be used. For example, potatoes of the chipping variety that can be used include, but are not limited to Aurora, Agria, Atlantic, Emtestolz, Idaho Russet, Kinnebec, Kennebec, Lady Rosetta, Lady Clair, Hermes, Maris Piper, Mentor, Monona, Norgold, Norchip, Norkota, Oneida, Sebago, Satuma, Snowden, and Tobique.

Non-chipping potato varieties can also be used including, but not limited to Marfona, King Edward, Yukon Gold, Desiree, Karlena and Estima. Similarly, French fry varieties such as Russet Burbank, and Bintje can be used. While chipping potatoes typically used for making potato crisps have relatively low levels of reducing sugars, and are not typically used to make French fries or baked potatoes, any potato can be used in accordance with the present invention and the present invention is not limited by physiological or biological make up of the potato.

The blended or unblended potatoes can then be washed by methods well known in the art. Next, the potatoes are preferably peeled such that at least about 80% of the peel is removed and more preferably at least about 85% of the peel is removed and even more preferably between about 85% and about 95% of the peel is removed and in one embodiment up to about 100% of the peel is removed. Because potatoes are often oval and because outer peripheral potato surfaces often comprise concave sections, especially in areas of the eye of the potato, increasing the peel removal level above 88% and especially above 95% can result in changing the shape of the peeled potato from oval to round and can result in substantially higher levels of pulp loss. Flakes made from a fully peeled potato will result in a lower level of acrylamide when used as an ingredient in thermally processed foods than flakes made from potatoes made with no or partial peeling.

The washed and peeled potatoes can then be segmented into a smaller size. Segmenting can comprise slicing, dicing, ricing, cubing, etc. Virtually any method which reduces the size of the potatoes can be used in the segmenting step. In one embodiment, the potatoes which are segmented into potato slices are preferably cut to a thickness of between 0,25 cm (0.1 inches) and 1,27 cm (0.5 inches) and more preferably between 0,79 cm (0.3125 inches) to 1,27 cm (0.50 inches). Applicants have found that flakes made from these slice thicknesses will result in a lower level of acrylamide when used as an ingredient in thermally processed foods than flakes made from potatoes made with thicker slices. It is believed that such result is because of the increased surface area to volume ratio that provides additional exposure to the acid blanching step described below. The surface area to volume ratio can also be raised by further dicing the slices e.g., by cutting a sliced slab into smaller sized pieces having the same thickness as the sliced slab, and/or by cutting the slab into a ridged configuration. It should be pointed out that thinner slices (e.g., 0,13 cm (0.053 inches)) than disclosed above can be used, however, slicing thinner can result in undesirable losses of potato matter.

Next, in one embodiment, the sliced potatoes, also known as slabs, are treated in an acidic solution after the slicing step and prior to the mashing step to make a plurality of treated food pieces. As used herein, a "treated food piece" refers to a food that has been contacted in an acidic solution having a pH of between about 3.0 and about 6.0 and in one embodiment between about 3.5 and about 5.0 during a soaking step, a blanching step, washing step, and/or a cooling step prior to a native moisture cooking step (typically a steam cooking step), as shown in Figure 3. As used herein, "a native moisture cook" refers to a cooking step whereby a food is cooked, but retains a moisture content within about 5% of its native moisture content after the native moisture cooking step and prior to the mashing step. Thus, the dehydration from the cooking step is non-existent to minimal.

An acidic solution having a pH above about 6.0 does not effectively treat the slab. A pH lower than about 3.5 can damage the cell walls causing the surface of the potato slice to peel off making it difficult to native moisture cook the slice. In one embodiment, the pH is measured at or near the outlet of the unit operation. For example, the pH of the blancher is measured near or at the outlet of the blancher.

In one embodiment, the acidic solution comprises a temperature of between 21°C and 100°C ( 70°F and 71°C and 79°C) more preferably between 66°C and 82°C (150°F and 180°F) and most preferably between 71°C and 79°C (160°F and 175°F). Higher temperatures require less acid (e.g., the pH range closer to 5.0 can be used) to achieve the same desired results. In one embodiment, the slices are soaked between about 15 and about 30 minutes. While such a range is preferable because it is a typical time spent in the blancher in an existing flake manufacturing operation, other suitable times can be used. In an acid blanching embodiment, sufficient acid is injected to maintain a pH of between about 3.5 and about 6.0 throughout the blancher. A blancher can have a recycle pump to recycle water from the downstream end of the blancher back to the upstream end of the blancher. Because it may be desirable to wash away free starch in the blancher, additional make-up water may be necessary and a continuous make-up acid injection system can be used whereby the acid level at or near the outlet of the blancher can be measured and acid can be added as necessary to ensure the blanch water in the blancher maintains the desired pH range.

In one embodiment, the acid used can be selected from acids recognized both as food grade and Generally Recognized as Safe (GRAS) by the Food Chemical News Guide. It should be pointed out that food grade acids can be a strong acid, a weak acid, or an organic acid, and mixtures thereof. Examples of food grade acids, include, but are not limited to one or more acids selected from citric acid, phosphoric acid, and hydrochloric acid.

In one embodiment, the blanched potatoes are then cooled by immersing the precooked/blanched potato slices in water held at, or below, (75°F) 23.9°C for 20 to 60 minutes. In an alternative embodiment, if a dough with more cohesion will be made from the potato flakes, the cooling step can be omitted and slices can be rinsed with hot water (e.g, > 49°C to 100°C (120°F to 212°F) and more preferably 71°C to 77°C (160°F to 170°F) rinse.

In one embodiment, following the cooling step, the potato pieces are cooked in a native cooking step with steam or submerged in water for a time and temperature sufficient to complete the cooking, the degree of starch gelatinization, reduce enzymatic activity, and soften the potatoes to the point where they can be mashed. In one embodiment, the native moisture cooking step occurs with steam at a temperature of (190°F-250°F) 87.8°C to 121°C) for 15 to 60 minutes. Any acid added to the potato piece during the soaking, blanching, and/or cooling steps is substantially removed during the native moisture cooking step.

In one embodiment, low leach potato flakes are made. Low leach potato flakes are potato flakes that are made from potato slices that are not blanched or pre-cooked and then cooled prior to cooking. Rather, low leach potato flakes are made by steam cooking (e.g., a native moisture cooking step) the potato slices and then mashing those cooked potato slices. Consequently, in one embodiment, the acid is added in the steam cooking step and the potato flakes are made without a blanching/pre-cooking step. An optional rinse step can be used to remove acid added to the food pieces during the cooking step. However, the condensate from the native moisture cooking step may remove suitable amounts of the acid from the slices.

In an alternative embodiment, a hybrid treated flake, which is more cohesive than a standard flake, but less sticky than a low leach flake, is made by eliminating the cooling step of the flake treatment process, but adding a hot water (71°C to 74°C) (60°F to 165°F) washing step after acid blanching and before steam cooking to rinse off excess acid from the blanched slabs. Such hot water would not cool down the acid blanched slabs allowing their gelatinized starch to retrograde. Consequently, in such an embodiment, there is still leaching loss of reducing sugars because of the water contact, so it is believed that thermally processed snacks made with this type of flake would have a flavor similar to those made from a conventional flake. By using a hot water step after the acid blanching, the washing of surface acid is preserved but the loss of flake stickiness that a cooling step promotes should be reduced. Snack dough made with a flake treated in such an alternative embodiment, should have more cohesiveness than a dough made from a conventional flake. Such a flake could benefit doughs where more cohesiveness at low dough moisture is desired and should reduce snack browning and perhaps acrylamide levels by having less reducing sugars present in the flakes.

Referring back to Figure 3, in one embodiment, following the native moisture cooking step, the cooked potato slices are comminuted to form a potato mash. Typical means for comminuting potato slices include ricing, mashing, and shredding. Next, in one embodiment, acrylamide reducing agents and preferably calcium chloride up to about 0.9 % by weight of the potatoes can be added to the potato mash.

It should be noted that the addition of too much acid after the mashing step can make the mashed potatoes difficult to mix because when acid is added to mashed potatoes, the acid will cleave the glycosidic bonds between glucose units and make the potato surface more soluble. An increased level of soluble starch can make the dough stickier and thus can make it more difficult to mix and drum dry.

The acrylamide reducing agents added to the mash can include, but are not limited to enzymes such as asparaginase, one or more acrylamide reducing amino acids, divalent or trivalent cations that reduce acrylamide, preferably said salts with anion that has a pKa of less than about 4, an acid and combinations thereof. In one embodiment, the acrylamide reducing agent comprises a calcium salt. The acrylamide reducing amino acids can be selected from cysteine, lysine, glycine, histidine, alanine, methionine, glutamic acid, aspartic acid, proline, phenylalanine, valine, arginine, and mixtures thereof. The salts with anion that has a pKa less than about 4 can be selected from calcium chloride, calcium lactate, calcium malate, calcium gluconate, calcium phosphate monobasic, calcium acetate, calcium lactobionate, calcium propionate, calcium stearoyl lactate, magnesium chloride, magnesium citrate, magnesium lactate, magnesium malate, magnesium gluconate, magnesium phosphate, magnesium sulfate, aluminum chloride hexahydrate, aluminum chloride, ammonium alum, potassium alum, sodium alum, aluminum sulfate, ferric chloride, ferrous gluconate, ferrous fumarate, ferrous lactate, ferrous sulfate, cupric chloride, cupric gluconate, cupric sulfate, zinc gluconate, and zinc sulfate.

Following the additive step, a drying step is performed on the potato mash, typically with a drum dryer. The drum dryer dries the mash into a potato sheet having a moisture content of about 6% to 15%. The drum dryer does not use hot oil for drying. Following drying, the potato sheet can be comminuted into potato flakes using a comminuting apparatus such as a hammermill.

In one embodiment, the present invention can be used to treat dehydrofrozen food product. For example, in one embodiment, dehydrofrozen potatoes are made by cutting raw potatoes into cubes. Any suitable cube size can be used including a cube having dimensions of ¼-inch or 3/8-inch on each to cubes having sizes of 1/2" x 1" x 1". The cubes can then be acid blanched in a solution having a pH of between about 3.5 and about 6.0 at a temperature of between 66°C to 82°C (150 to 180 F) and then partially dried in an oven to a moisture content of between about 10% and about 65% and more preferably between about 52% to about 62% by weight. The partially dried cubes can then be frozen for later use.

### EXAMPLES

The following examples are provided to more fully illustrate the invention and are not intended to be limitative thereof.

Example 1 - Comparative Tests of Acid Treated Slabs v. Acid Treated Mash

To ascertain the impact of various treatments of potato while making potato flakes, a control sample was compared with five other samples of potato flakes made in accordance with various embodiments of the present invention.

A series of tests were designed to evaluate the relative effectiveness of various treatments to potato slices in making treated flakes that would be used to make low acrylamide fried or baked products. The control flakes were made by a prior art process similar to that discussed in Figure 1, without the use of any added acid or calcium chloride. The test flakes were made from sliced potatoes that were placed into various solutions for treatment for 15 minutes. For example, in Tests 1-3 and 5 shown in the Table immediately below, different amounts of additives were added to the mash after the mashing step shown in Figure 3. The amount of additive acid added to the mash was based on the weight percent of potatoes in the mash/blancher. In Tests 4 and 5, acid was added to the potato slabs during the blanching step shown in Figure 3. The potato slabs were acid blanched at 71°C (160°F) for about 15 minutes. The potato flakes were drum dried to a moisture content of 7.5% to about 11%.

The flakes from each flake sample were mixed with pre gelled starch, sugar, chemical leavening agents, lecithin, oil, and water to make a potato crisp dough. Potato flakes were about 80% of the dough ingredients (i.e., without added water). The dough was sheeted and cut into chip shapes and baked to less than 2% moisture by weight in an oven having a temperature profile starting at 288°C (550°F) and ending at 132°C (270°F). The baked potato crisps were tested for acrylamide by GC-MS. The baked potato crisps were then tasted by an expert laboratory panel. The results of the tests are shown below.

**Table 1: Batch Test**

| **Test** | **Treatment**** | **Amount (wt%)*** | **Treatment** | **AA, % Reduction**** | **Comment****** |
|---|---|---|---|---|---|
| 1 | Phosphoric Acid | 0.05% | Mash | 1.83% | Off Flavor |
| 2 | Phosphoric Acid | 0.09% | Mash | 59.47% | Off Flavor |
| 3 | Phosphoric Acid + CaCl₂ | 0.09% & 0.18% | Mash | 89.24% | Off Flavor |
| 4 | Hvdrochloric Acid | 0.13% | Slab | 50.71% | No Off Flavors |
| 5 | Hydrochloric Acid + CaCl₂*** | 0.25% & 0.10% | Slab & Mash | 93.76% | No Off Flavors |

| | | | | | |
|---|---|---|---|---|---|
| *Based on 200 Ib potatoes with 30 gal water during blanching ** For Baked Product - Compared with control sample made at same time. ***Acid in Blancher and CaCl₂ in Mash **** Finish Product Evaluation by Lab Expert Panel | | | | | |

These tests demonstrate that treatment of potato slabs in acid prior to the cooking step when making potato flakes can effectively make low acrylamide flakes, with less calcium chloride addition to the mash with no resultant off-flavors. It is believed that the lack of off-flavors is a consequence of the fact that any acid added during the blanching step is washed off during the cooling and native moisture cooking steps as a result of the contact with the cooling water, steam, condensate, and / or hot water. The addition of acid to the mash, on the other hand, is not removed prior to drum drying, carries over to the baked crisps, and therefore results in off-flavors. Further, because acid is mixed into the mash, the removal of such acid would very difficult.

Example 2 -Tests of Calcium Chloride Treated Slabs

Another test was conducted to analyze the effects of calcium chloride addition at the blanching step. The control batch did not add calcium chloride to any of the processing steps during the manufacture of the potato flakes. A batch of potato flakes were made where 0.92% calcium chloride by weight of raw potatoes was added to the potato slabs in the blanching step, shown in Figure 3.

The flakes from each flake sample were mixed with pre gelled starch, sugar, chemical leavening agents, lecithin, oil, and water to make a potato crisp dough. Potato flakes were about 80% of the dough ingredients (i.e., without added water). The dough was sheeted and cut into chip shapes and baked to less than 2% moisture by weight in an oven having a temperature profile starting at 288°C (550°F ) and ending at 132°C (270°F) The baked potato crisps were tested for acrylamide by GC-MS. The baked potato crisps were then tasted by an expert laboratory panel. The results of the test are shown below.

**Table 2: Batch Test - 50 Ib potatoes/hr**

| **Treatment** | **Amount** | **Treatment** | **AA, % Reduction*** | **Comment***** |
|---|---|---|---|---|
| Calcium Chloride | 0.92% | Slab | 0.00% | No Off Flavors |

| | | | | |
|---|---|---|---|---|
| *** Finish Product Evaluation by Lab Expert Panel | | | | |

As revealed by the test above, the addition of calcium chloride at the blanching step, unlike acid, has no effect on the acrylamide level of the food product made from the flakes.

Example 3 - Acid Treatment of Potato Flakes during Blanching

Based on the test results above, a series of further tests was designed to evaluate the relative effectiveness of various potato slab treatments for making low acrylamide flakes and to compare the taste and texture aspects of finished product made from control flakes and the treated flakes or low acrylamide flakes. Specifically, additional testing was conducted with acidic treatments at the blancher.

To ascertain the impact of various treatments of potato while making potato flakes, a control sample was compared with twelve other samples of potato flakes made in accordance with various embodiments of the present invention.

The control flakes were made by a prior art process similar to that discussed in Figure 1, without the use of any added acid or calcium chloride. The test flakes were made from potato slabs that were placed into various solutions of food grade hydrochloric acid for treatment for 15 minutes.

The flakes from each flake sample were mixed with pre gelled starch, sugar, chemical leavening agents, lecithin, oil, and water to make a potato crisp dough. Potato flakes were about 80% of the dough ingredients on a dry basis (i.e., without added water). The dough was sheeted and cut into chip shapes and baked to less than 2% moisture by weight in an oven having a temperature profile starting at 288°C (550°F) and ending at 132°C (270°F). The baked potato crisps were tested for acrylamide by GC-MS. The baked potato crisps were then tasted by an expert laboratory panel.
The attributes of acceptability were rated on a nine point Likert scale. A response of nine indicating that a consumer liked the particular quality being evaluated extremely; a response of eight indicates that the consumer liked the quality being evaluated very much; seven indicating the consumer liked it moderately; six indicating the consumer liked the quality slightly; five indicating that the consumer neither liked nor disliked the quality; four indicating that the consumer disliked the quality slightly; three indicating that the consumer disliked if moderately; two indicating that the consumer disliked it very much; and one indicating that the consumer disliked the quality being evaluated extremely. The results of the tests arc shown below.

| Table 3: Scaled Line - Continuous Process - 240001b potatoes/hr | | | | | | GC-MS Analysis - Finish Product | | |
|---|---|---|---|---|---|---|---|---|
| **Treatment** | **Treated Flake Reducing Sugar %** | **Baked Snack Moisture, %** | **% AA Reduction Baked Snack** | **Overall Consumer Acceptability** | **Flavor Acceptability** | **Methional ppm²** | **DEP*100¹ ppm²** | **Phenyl-acetaldehyde, ppm²** |
| Control - 3/8 Slab - No Treatment | 1.48 | 2.7 | 0% | 6.87 | 5.98 | 0.90 | 1.58 | 0.95 |
| 3/8" Slab - pH 4 - 0.15% CaCl₂ | 1.20 | 2.12 | 44.36% | 6.68 | 6.87 | 0.84 | 1.07 | 0.94 |
| 3/8" Slab - pH 4 -0.15% CaCl₂ | 1.20 | 2.12 | 44.36% | 6.68 | 6.85 | 0.84 | 1.07 | 0.94 |
| 5/16" Slab - pH 5- 0.30% CaCl₂ | 1.87 | 1.64 | 61.08% | 6.87 | 6.68 | 0.83 | 0.59 | 0.84 |
| 3/8" Slab - pH 5 - 0.15% CaCl₂ | 1.38 | 2.6 | 63.01% | 7.01 | 6.95 | 0.71 | 0.71 | 0.78 |
| 5/16" Slab - pH 5 - 0.15%CaCl₂ | 1.42 | 2.24 | 65.05% | 6.17 | 5.75 | 0.75 | 0.69 | 0.65 |
| 5/16" Slab - 0.30% CaCl₂ | 2.35 | 2.62 | 68.34% | 6.4 | 6.12 | 0.71 | 0.51 | 0.66 |
| 5/16" Slab - pH 4 - 0.30% CaCl₂ | 1.84 | 1.52 | 68.81% | 6.8 | 6.82 | 0.78 | 0.33 | 0.61 |
| 3/8" Slab - pH 4 - 0.30% CaCl₂ | 1.23 | 2.36 | 72.41% | 7.01 | 7.18 | 0.64 | 0.46 | 0.74 |
| 5/16" Slab - pH 4 - 0.15% CaCl₂ | 2.17 | 1.49 | 74.01% | 6.6 | 6.52 | 0.74 | 0.42 | 0.74 |

| | | | | | | | | |
|---|---|---|---|---|---|---|---|---|
| ¹DEP* 100 is the value of the dimethyl-ethyl-pyrazine multiplied by 100 ²ppm means parts of a substance per million parts of product | | | | | | | | |

As revealed by the data above, the use of acid during the blanch, followed by the addition of calcium chloride during the mashing step and prior to drum drying results in a treated potato flake that can be used to make low acrylamide fried and baked snacks. This data further supports the conclusion that treated flakes, made by the use of acid prior to the native moisture cooking step coupled with the use of calcium chloride during the mashing step, when subsequently fried to moisture contents below about 3% by weight, results in a food product that has substantially less acrylamide in the finished food product than if the acidic pretreatment did not occur and calcium chloride was not added.

As revealed by the tests above, the addition of acid prior to the native moisture cooking step and prior to the mashing step results in a treated potato flake that can be used to make low acrylamide fried and baked snacks. As used herein, the term "low acrylamide potato flakes" means potato flakes that have been acid blanched prior to or during a native moisture cooking step, but prior to a mashing step so as to produce a potato flake that, upon subsequent thermally processing at food temperatures above about 120°C to a moisture content of less than 3% by weight results in a food product having an acrylamide lower than potato flakes thermally processed without the acid blanching prior to steam cooking. Further, use of the treated potato flake of the present invention as an ingredient in a low moisture, ready to eat food product results in a food product having a lower acrylamide concentration than if the product is made from prior art flakes made without an acid treatment step prior to the mashing step. Further, in one embodiment, because the acid treatment occurs before or during the blanching step, the acidic solutions can be washed away during subsequent cooking and other unit operations. Consequently, off-flavors from the acid are minimized and are not detectable by most consumers and the consumer acceptability data in the Table above suggests the food product made from treated flakes is close to the control food product made from untreated flakes for both overall consumer acceptability (texture, taste, flavor) and flavor acceptability.

Also revealed by the data presented in the Table above is the reduction of components associated with aspects of the Maillard browning reaction that relate to acrylamide formation. The Maillard reaction forms brown color, Strecker aldehydes (e.g., methional and phenylacetaldehye), pyrazines (e.g., dimethyl-ethyl-pyrazine), and acrylamide. Dimethyl-ethyl-pyrazine concentrations, for example have had relatively high correlations (e.g., r-squared of 0.85) with acrylamide concentrations. Acrylamide and pyrazines are well correlated because pyrazines are formed from ammonia that is released from asparagine and because the activation energy for pyrazine formation is similar to the activation energy for acrylamide formation.

The analytical data of the components associated with aspects of the Maillard browning action that relate to acrylamide formation further supports the data and trend indicating reduced levels of acrylamide in foods made from treated flakes.

Example 4 - Comparative Acid Blanching - Phosphoric v. Hydrochloric

To compare the effect of acid blanching of a weak acid versus a strong acid, a series of further tests were conducted to evaluate the relative effectiveness of various potato slice treatments for making low acrylamide flakes and to compare the titratable acidity of the blanch water using two different acids for acid blanching.

The control flakes were made by a prior art process similar to that discussed in Figure 1, without the use of any added acid or calcium chloride. The test flakes were made from sliced potatoes that were placed into one of two acidic solutions for acid blanching at 71°C (160 °F) for 15 minutes. The pH of the blanch water was measured shortly after concentrated acid was mixed into a kettle of hot water and potato slabs. A sample of the blanch water was simultaneously taken and tested for the titratable acidity using 0.1 N NaOH. The pH and titrable acidity were each measured again at the exit of the blancher after the potato slices had been in the acid blanch for 15 minutes. The potato slabs were then cooled, and native moisture cooked followed by mashing. Calcium chloride was added to some of the test samples after the mashing step, shown in Figure 3. The mashed potatoes were then drum dried to make potato flakes.

The flakes from each flake sample were mixed with pre gelled starch, sugar, chemical leavening agents, lecithin, oil, and water to make a potato crisp dough. Potato flakes were about 80% of the dough ingredients on a dry basis (i.e., without added water). The dough was sheeted and cut into chip shapes and baked to less than 2% moisture by weight in an oven having a temperature profile starting at 288°C (550°F) and ending at 132°C (270°F). The baked potato crisps were tested for acrylamide by GC-MS. The results of the tests are shown below. Those having ordinary skill in the art will understand that H₃PO₄ corresponds to phosphoric and, CaCl₂ corresponds to calcium chloride, and HCl corresponds to hydrochloric acid.

| Table 4. Comparative Acid Blanching | | | | | | | | |
|---|---|---|---|---|---|---|---|---|
| Description | Slab Thickness (inches) | Acid Type | Wt % acid per 200 Ibs Potatoes + 30 gal water | Blanch Solution pH After 15 min blanch | Blanch solution Titralable Acidity (ml 0.1 N NaOH) after 15 min Blanch | Wt % CaCl₂ per Ib of potatoes | Baked Crisp Finish Moisture, % | AA % Reduction |
| Control No Acid No CaCl₂ | 0.28 | None | 0 | 6.7 | 0.20 | 0.00% | 2.19 | 0.00% |
| | | | | | | | | |
| Low HCl No CaCl₂ | 0.32 | HCl | 0.01% | 5.8 | 0.8 | 0.00% | 1.69 | 12.20% |
| Low H₃PO₄ No CaCl₂ | 0.30 | H₃PO₄ | 0.03% | 5.7 | 1.2 | 0.00% | 1.49 | -3.77% |
| | | | | | | | | |
| Low HCl With CaCl₂ | 0.32 | HCl | 0.01% | 5.6 | 1.0 | 0.13% | 1.67 | 71.50% |
| Low H₃PO₄ With CaCl₂ | 0.29 | H₃PO₄ | 0.03% | 5.6 | 1.3 | 0.13% | 1.66 | 37.00% |
| | | | | | | | | |
| Mid HCl With CaCl₂ | 0.31 | HCl | 0.03% | 4.7 | 1.6 | 0.06% | 1.79 | 69.72% |
| Mid H₃PO₄ With CaCl₂ | 0.30 | H₃PO₄ | 0.06% | 5.8 | 2.2 | 0.06% | 1.54 | 19.70% |
| | | | | | | | | |
| High HCl No CaCl₂ | 0.30 | HCl | 0.05% | 4.3 | 1.9 | 0.00% | 1.44 | 22.28% |
| High H₃PO₄ No CaCl₂ | 0.28 | H₃PO₄ | 0.11% | 4 | 3 | 0.00% | 1.67 | 28.47% |
| | | | | | | | | |
| High HCl With CaCl₂ | 0.30 | HCl | 0.05% | 4.3 | 1.6 | 0.13% | 1.76 | 64.55% |
| High H₃PO₄ With CaCl₂ | 0.27 | H₃PO₄ | 0.11% | 4.4 | 3.2 | 0.13% | 1.99 | 67.26% |
| | | | | | | | | |

Interestingly, in several of the tests, food products made from flakes treated with hydrochloric acid produced substantially lower or similar levels of acrylamide as food products made from flakes treated with phosphoric acid, even when the addition of the phosphoric acid created a similar pH. Consequently, the trend seems to indicate that hydrochloric acid is more effective than phosphoric acid.

While the above disclosure demonstrates the applicability of the present invention to potato flakes and foods made from potato flakes and potato granules, the present invention can be applied to other food products such as potato flour that are blanched, cut and cooked at native moisture content prior to being thermally processed. For example, canned corn is prepared by cleaning the corn to remove silk and other extraneous material, blanching the corn to deactivate enzymes, cutting the corn off the cob and placing the corn into a container, adding brine, acidified water or other suitable solution to corn, sealing the container and heating the container in a native moisture cooking step. The native moisture cooking steps can occur for various times and temperatures based on the food product at issue. For example, when retorting a canned corn, the native moisture cooking step can occur, for example, at elevated pressures (e.g., about 30 psig) and at temperatures ranging from 116°C to 132°C (240°F to 270°F) for at least about 5 minutes and between about 5 minutes and about 180 minutes. The can is then cooled and the treated corn can be used as an ingredient in a thermally processed food product.

U.S. Pat. No. 4,419,375, discloses a process for making a potato patty. That process can be modified by the present invention to provide a potato patty having a lower level of acrylamide. For example, Figure 1 of that reference discloses providing peeled potatoes, slicing the potatoes, cooking the potatoes, and then mashing the potatoes prior to further drying steps. Such process can be easily be modified by soaking the slices in acid prior to or during the cooking step disclosed in Figure 1 of U.S. Pat. No. 4,419,375. Consequently, the present invention provides a way to make low acrylamide potato pattys and hash browns. Similarly, those having ordinary skill in the art, armed with the present disclosure will be able to make other dried food products including, but not limited to potato granules, potato flour.

## Claims

1. A method for making a dried food product, said method comprising the steps of:
a) cutting a food product to make a plurality of food pieces having a native moisture content;
b) native moisture cooking said food pieces in an acidic solution having a pH of less than 6.0 to make a plurality of treated food pieces such that said treated food pieces comprise a moisture content within 5% of said native moisture content;
c) mashing said treated food pieces;
d) drying said treated food pieces to a moisture content of between 6% and 15% by weight to make said dried food product.

2. The method of claim 1, wherein step b) comprises
b) (i) contacting said pieces in an acidic solution having a pH maintained of less than 6.0 to make a plurality of treated food pieces prior to native moisture cooking of said food pieces; and
b) (ii) native moisture cooking said treated food pieces such that said treated food pieces comprise a moisture content within 5% of said native moisture,
optionally wherein step b) (i) and step b) (ii) occur simultaneously.

3. The method of claim 1 further comprising rinsing said treated food pieces after step b).

4. The method of claim 1 further comprising a blanching step prior to step b).

5. The method of claim 1 further comprising the addition of a calcium salt after step c).

6. The method of claim 2 wherein said cutting results in a plurality of slices having a slice thickness of between 0.25 cm (0.10 inches) and 1,27cm (0.50 inches).

7. The method of claim 2 wherein step b) (i) further comprises the step of concurrently blanching said food pieces at a temperature of between 66°C (150 °F) and 82°C (180 °F), optionally the rinsing comprising a hot water rinse after said blanching step and prior to said native cooking step wherein said hot water wash comprises rinsing said treated food pieces after step b) (i) in a solution having a temperature of between 49°C (120°F) and 77°C (170°F),
or wherein step b) (i) occurs in a blancher.

8. The method of claim 7 further comprising a cooling step after said native cooking step wherein said cooling step comprises rinsing said treated food pieces after step b) in a solution having a temperature of less than about (75°F) 23.9°C.

9. The method of claims 1, 2, 3, 7 or 8 further comprising the steps of thermally processing said dried food product at a food temperature above 120°C to a moisture content of less than 3% by weight.

10. The method of claim 2 wherein step b) (i) occurs at ambient temperature or step b) (i) occurs at a temperature of between 21°C (70°F) and 100°C (212°F).

11. The method of claim 2 wherein said acidic solution at step b) (i) comprises hydrochloric acid or wherein said acidic solution at step b) (i) comprises a pH of at least 3.0.

12. The method of claim 2 wherein an acrylamide reducing agent is added at step d), optionally wherein said acrylamide reducing agent further comprises a calcium salt.

13. The method of claim 2 wherein said food further comprises potato, optionally wherein said dried food product further comprises potato flakes or potato granules, or potato flour.

14. The method of claim 2 wherein step a) is preceded by a peeling step where at least 85% of the peel is removed.

15. The method of claim 2 wherein said contacting at step b) (i) occurs in a treatment vessel prior to a blancher.

## Patentansprüche

1. Verfahren zum Herstellen eines getrockneten Nahrungserzeugnisses umfassend die Schritte:
(a) Zerschneiden eines Nahrungserzeugnisses, um eine Vielzahl Nahrungsstücke mit einem natürlichen Wassergehalt herzustellen;
(b) Garen der Nahrungsstücke unter Beibehaltung des natürlichen Wassergehalts in einer sauren Lösung mit einem pH von weniger als 6.0, um eine Vielzahl behandelter Nahrungsstücke herzustellen, so dass die behandelten Nahrungsstücke einen Wassergehalt innerhalb von 5% des natürlichen Wassergehalts umfassen;
(c) Zerstampfen der behandelten Nahrungsstücke;
(d) Trocknen der behandelten Nahrungsstücke bis zu einem Wassergehalt zwischen 6 und 15 Gew.-%, um das Nahrungserzeugnis herzustellen.

2. Verfahren nach Anspruch 1, wobei Schritt b) umfasst
b) (i) vor dem Garen der Nahrungsstücke unter Beibehaltung des natürlichen Wassergehalts in Kontakt Bringen der Stücke in einer sauren Lösung mit einem bei weniger als 6.0 gehaltenen pH, um eine Vielzahl von behandelten Nahrungsstücken zu herzustellen; und
b) (ii) Garen der behandelten Nahrungsstücke unter Beibehaltung des natürlichen Wassergehalts, so dass die behandelten Nahrungsstücke einen Wassergehalt innerhalb von 5% des natürlichen Wassergehalts enthalten,
wobei Schritt b) (i) und Schritt b) (ii) gegebenenfalls gleichzeitig stattfinden.

3. Verfahren nach Anspruch 1, weiter umfassend Spülen der behandelten Nahrungsstücke nach Schritt b).

4. Verfahren nach Anspruch 1, weiter umfassend einen Abbrüh-Schritt vor Schritt b).

5. Verfahren nach Anspruch 1, weiter umfassend das Hinzufügen eines Calciumsalzes nach Schritt c).

6. Verfahren nach Anspruch 2, wobei das Zerschneiden eine Vielzahl von Scheiben mit einer Scheibendicke zwischen 0.25 cm und 1,27 cm ergibt.

7. Verfahren nach Anspruch 2, wobei Schritt b) (i) weiterhin den Schritt des gleichzeitigen Abbrühens der Nahrungsteile bei einer Temperatur zwischen 66 °C und 82 °C umfasst, wobei das Spülen gegebenenfalls eine Heißwasserspülung nach dem Abbrühschritt und vor dem Schritt des Garens unter Beibehaltung des natürlichen Wassergehalts umfasst, wobei die Heißwasserspülung Spülen der behandelten Nahrungsstücke nach Schritt b) (i) in einer Lösung mit einer Temperatur zwischen 49 °C und 77 °C umfasst, oder wobei Schritt b) (i) in einem Blanchierer stattfindet.

8. Verfahren nach Anspruch 7, weiter umfassend einen Kühlungsschritt nach dem Schritt des Garens unter Beibehaltung des natürlichen Wassergehalts, wobei der Kühlungsschritt Spülen der behandelten Nahrungsstücke nach Schritt b) in einer Lösung mit einer Temperatur von weniger als 23,9 °C umfasst.

9. Verfahren nach einem der Ansprüche 1, 2, 3, 7 oder 8, weiter umfassend die Schritte thermales Prozessieren des getrockneten Nahrungserzeugnisses bei einer Nahrungstemperatur über 120 °C bis zu einem Wassergehalt von weniger als 3 Gew.-%.

10. Verfahren nach Anspruch 2, wobei Schritt b) (i) bei Raumtemperatur stattfindet oder Schritt b) (i) bei einer Temperatur zwischen 21 °C und 100 °C stattfindet.

11. Verfahren nach Anspruch 2, wobei die saure Lösung in Schritt b) (i) Salzsäure umfasst oder wobei die saure Lösung in Schritt b) (i) einen pH von mindestens 3.0 umfasst.

12. Verfahren nach Anspruch 2, wobei ein Acrylamid reduzierendes Agens in Schritt d) hinzugefügt wird, wobei das Acrylamid reduzierende Agens gegebenenfalls weiterhin ein Calciumsalz umfasst.

13. Verfahren nach Anspruch 2, wobei das Nahrungserzeugnis ferner Kartoffel enthält, wobei das getrocknete Nahrungserzeugnis gegebenenfalls ferner Kartoffelflakes oder Kartoffelkörnchen oder Kartoffelmehl enthält.

14. Verfahren nach Anspruch 2, wobei Schritt a) ein Schälschritt vorausgeht, wobei mindestens 85% der Schale entfernt wird.

15. Verfahren nach Anspruch 2, wobei das in Kontakt Bringen in Schritt b) (i) in einem Verarbeitungsgefäß vor einem Blanchierer stattfindet.

## Revendications

1. Méthode de production d'un produit alimentaire sec, ladite méthode comprenant les étapes consistant à :
a) couper un produit alimentaire pour produire une pluralité de morceaux d'aliments ayant une teneur en humidité native ;
b) cuire à l'humidité native lesdits morceaux d'aliments dans une solution acide ayant un pH inférieur à 6,0 pour produire une pluralité de morceaux d'aliments traités de sorte que lesdits morceaux d'aliments traités comprennent une teneur en humidité de 5 % de ladite teneur en humidité native ;
c) brasser lesdits morceaux d'aliments traités ;
d) sécher lesdits morceaux d'aliments traités à une teneur en humidité entre 6 % et 15 % en poids pour produire ledit produit alimentaire sec.

2. Méthode selon la revendication 1, dans laquelle l'étape b) comprend
b) (i) la mise en contact desdits morceaux dans une solution acide ayant un pH maintenu à moins de 6,0 pour produire une pluralité de morceaux d'aliments traités avant la cuisson à l'humidité native desdits morceaux d'aliments ; et
b) (ii) la cuisson à l'humidité native desdits morceaux d'aliments traités de sorte que lesdits morceaux d'aliments traités comprennent une teneur en humidité de 5 % de ladite humidité native,
éventuellement, dans laquelle l'étape b) (i) et l'étape b) (ii) sont réalisées de façon simultanée.

3. Méthode selon la revendication 1, comprenant en outre le rinçage desdits morceaux d'aliments traités après l'étape b).

4. Méthode selon la revendication 1, comprenant en outre une étape de blanchiment avant l'étape b).

5. Méthode selon la revendication 1, comprenant en outre l'addition d'un sel de calcium après l'étape c).

6. Méthode selon la revendication 2, dans laquelle ladite coupe donne une pluralité de tranches ayant une épaisseur de tranche entre 0,25 cm (0,10 pouce) et 1,27 cm (0,50 pouce).

7. Méthode selon la revendication 2, dans laquelle l'étape b) (i) comprend en outre l'étape de blanchiment concomitant desdits morceaux d'aliments à une température entre 66° C (150° F) et 82° C (180° F), éventuellement, le rinçage comprenant un rinçage à l'eau chaude après ladite étape de blanchiment et avant ladite étape de cuisson native, dans laquelle ledit lavage à l'eau chaude comprend le rinçage desdits morceaux d'aliments traités après l'étape b) (i) dans une solution ayant une température entre 49° C (120° F) et 77° C (170° F) ou dans laquelle l'étape b) (i) est réalisée dans un dispositif de blanchiment.

8. Méthode selon la revendication 7, comprenant en outre une étape de refroidissement après ladite étape de cuisson native, dans laquelle ladite étape de refroidissement comprend le rinçage desdits morceaux d'aliments traités après l'étape b) dans une solution ayant une température inférieure à environ 23,9° C (75° F).

9. Méthode selon les revendications 1, 2, 3, 7 ou 8, comprenant en outre les étapes consistant à traiter thermiquement ledit produit alimentaire sec à une température alimentaire supérieure à 120° C à une teneur en humidité inférieure à 3 % en poids.

10. Méthode selon la revendication 2, dans laquelle l'étape b) (i) est réalisée à température ambiante ou l'étape b) (i) est réalisée à une température entre 21° C (70° F) et 100° C (212° F).

11. Méthode selon la revendication 2, dans laquelle ladite solution acide à l'étape b) (i) comprend de l'acide chlorhydrique ou dans laquelle la solution acide à l'étape b) (i) comprend un pH d'au moins 3,0.

12. Méthode selon la revendication 2, dans laquelle un agent réducteur d'acrylamide est ajouté à l'étape d), éventuellement, dans laquelle ledit agent réducteur d'acrylamide comprend en outre un sel de calcium.

13. Méthode selon la revendication 2, dans laquelle ledit aliment comprend en outre de la pomme de terre, éventuellement, dans laquelle ledit produit alimentaire sec comprend en outre des flocons de pomme de terre ou des granulés de pomme de terre ou de la farine de pomme de terre.

14. Méthode selon la revendication 2, dans laquelle l'étape a) est précédée d'une étape de pelage où au moins 85 % de la peau sont éliminés.

15. Méthode selon la revendication 2, dans laquelle ladite étape de mise en contact à l'étape b) (i) est réalisée dans un récipient de traitement avant un dispositif de blanchiment.
